# EUROPÄISCHE PATENTSCHRIFT

(11) **EP 3 590 694 B1**
(45) Veröffentlichungstag und Bekanntmachung des Hinweises auf die Patenterteilung: **22.03.2023**
(21) Anmeldenummer: 19184667.4
(22) Anmeldetag: 05.07.2019
(51) Int. Cl.: B29D 29/06, B65G 15/46, B65G 15/64, B65G 39/071

(54) **ELASTISCHES TRANSPORTBAND UND HERSTELLUNGSVERFAHREN**
ELASTIC TRANSPORT BELT AND METHOD OF MANUFACTURING THE SAME
BANDE TRANSPORTEUSE ÉLASTIQUE ET PROCÉDÉ DE FABRICATION

(30) Priorität: 05.07.2018 DE 102018116347
(43) Veröffentlichungstag der Anmeldung: 08.01.2020
(73) Patentinhaber: Wallroth F & E UG, 56337 Arzbach (DE)
(72) Erfinder: Knopp, Hans Werner, 56412 Großholbach (DE)
(74) Vertreter: Bernsmann, Falk

(56) Entgegenhaltungen:
- EP-A2- 1 063 448
- CN-U- 205 616 075
- DE-A1-102013 205 997
- US-A- 207 626
- US-A- 3 941 238
- US-A- 3 980 174

## Beschreibung

### Technisches Gebiet

Die Erfindung betrifft ein elastisches Transportband nach dem Oberbegriff des Anspruchs 1.

Die Erfindung betrifft außerdem ein Transportsystem mit einem elastischen Transportband zum Transportieren von Gütern in einer Transportrichtung entlang einer Transportbandebene des Transportbands.

### Stand der Technik

Transportbänder sind aus dem Stand der Technik vielfältig und gut bekannt, wobei diese Transportbänder in der Regel endlos ausgestaltet und somit umlaufend an einem Gestell angeordnet sind. Die Transportbänder werden dabei an Walzen von in dem Gestell gelagerten Umlenk- und/oder Antriebsvorrichtungen geführt und umgelenkt sowie gegebenenfalls mittels diesen angetrieben.

Damit ein Transportband, insbesondere quer zu seiner Transportrichtung, definiert an einer Walze geführt werden kann, sind diesbezügliche Walzen oftmals ballig ausgeformt, wodurch sich der Effekt ergibt, dass das Transportband im Betrieb im Wesentlichen zentrisch an diesem balligen Bereich gehalten und geführt wird. Nachteilig bei derartig ballig ausgestalteten Walzen ist es, dass sich entlang der Seitenbereiche des Transportbands zwischen diesem und der balligen Walze Verschmutzungen anlagern können, welche den Führungseffekt stören können, sodass eine erforderliche Seitenführung des Transportbands nicht mehr ausreichend gewährleistet werden kann, wodurch im schlechtesten Fall das Transportband seitlich von der balligen Walze herunterlaufen und abspringen kann.

Hinsichtlich einer anderen konstruktiven Lösung ist es bekannt, zueinander leicht angestellte Walzen vorzusehen, um ein Transportbandelement in Transportrichtung gesehen beidseits an seinen Randbereichen stützen zu können, so dass ein seitliches Auswandern des Transportbands quer zur Transportrichtung unterbunden werden kann. Diese Lösung ist aufgrund der Vielzahl an erforderlichen Walzen jedoch recht aufwendig.

Hinsichtlich einer besonders einfachen Ausgestaltung eines ein Transportband umfassenden Transportsystems kann das Transportband beispielsweise lediglich einen Obertrum und einen Untertrum ausbilden, welche im Wesentlichen parallel zueinander geführt sind.

Die Druckschrift GB1039312A offenbart ein Transportsystem mit einem Endlosgurt. Dieser Gurt weist sich in Längsrichtung erstreckende Erhebungen auf. Der Gegenstand von GB1039312A umfasst weiter einen Roller zum Führen des Endlosgurtes, der parallele Rillen in Umfangsrichtung aufweist, welche in die Rillen des Gurtes greifen können, auf. Als besondere Form sind im Wesentlichen u-förmige Rillen beschrieben.

Nachteilig dabei ist, dass derartige Rollengürtel keinen optimalen Griff auf den Rollen aufweisen und aufgrund dessen Reibverluste auftreten können. Hinzu kommt, dass bei Temperaturverschiebung die Passgenauigkeit zwischen Rillen in dem Gürtel und Erhebungen an den Rollen leiden kann. Bei der Montage und der Herstellung ist auf einen besonders passgenauen Sitz zu achten.

Die Druckschrift EP2679522A1 beschreibt ein Transportbandelement zum Transportieren von Gütern mit einem elastisch biegbaren und flächig ausgestalteten Grundkörper, mit einer Aufnahmefläche zum Aufnehmen der Güter und mit einer Spurführungseinrichtung zum Führen des Transportbandelements an einer Auflagevorrichtung. Die Spurführungseinrichtung umfasst ein oder mehreren jeweils als Materialschwächung ausgebildete Rillenelemente, welche sich in Laufrichtung des Transportbandelements erstreckend in dem elastisch biegbaren Grundkörper angeordnet sind. Die Druckschrift DE 10 2013 205997 A1 offenbart ein elastisches Transportband nach dem Oberbegriff des Anspruchs 1.

Die Rillenelemente können v-förmig oder u-förmig sein. Nachteilig an solchen Rillenelementen ist, dass die Kontaktfläche zwischen der Auflagevorrichtung und den Rillenelementen oft schlecht definiert ist, insbesondere wenn die Form der Auflagevorrichtung nicht genau an die Form der Rillenelemente angepasst ist oder, beispielsweise durch Verschleiß oder Verschmutzung davon abweicht. Dadurch kann es zu einer unzureichenden Führung oder einem erhöhten Verschleiß kommen, beispielsweise wenn nur die Kanten einer Auflagevorrichtung mit den Rillenelementen in Kontakt stehen.

Ferner besteht insbesondere bei einer lateralen Stauchung des Transportbandelements, beispielsweise wenn das Transportbandelement von einem Transportgut belastet oder um eine Kurve geführt wird, die Gefahr, dass die Auflagevorrichtung in einem v-förmigen oder u-förmigen Rillenelement eingeklemmt wird, sodass sich Reibung und Verschleiß erhöhen, oder aus dem Rillenelement herausgedrückt wird, sodass die Führungswirkung verloren geht.

### Technische Aufgabe

Die Aufgabe der Erfindung ist es, ein Transportband und ein Transportsystem zu schaffen, die einfach und kostengünstig herzustellen sind und einen zuverlässigen, effizienten und wartungsarmen Transport von Gütern erlauben.

### Technische Lösung

Der Gegenstand der vorliegenden Erfindung stellt ein Transportband bereit, das die technische Aufgabe entsprechend den Merkmalen des Anspruches 1 löst. Ebenso wird die Aufgabe durch ein Transportsystem gemäß Anspruch 6 und ein Verfahren gemäß Anspruch 11 gelöst. Vorteilhafte Ausgestaltungen ergeben sich aus den abhängigen Ansprüchen.

### Beschreibung der Ausführungsarten

Ein erfindungsgemäßes elastisches Transportband ist für ein Transportsystem zum Transportieren von Gütern in einer Transportrichtung entlang einer Transportbandebene des Transportbands ausgelegt. Ein "Transportband" im Sinne der Erfindung ist ein bei seinen vorgesehenen Einsatzbedingungen elastischer, flächiger, beispielsweise im Wesentlichen quaderförmiger, Körper, dessen Ausdehnung in der Transportbandebene wesentlich größer ist als senkrecht dazu. Ein solches Transportband hat zwei Flächenseiten, von denen eine in der Regel zum Tragen der Güter dient, und jeweils zwei wesentlich kleinere Schmalseiten und Stirnseiten. In der Regel ist ein Transportband länglich geformt, wobei in der Transportebene eine Ausdehnung entlang der Transportrichtung wesentlich größer ist als eine Ausdehnung senkrecht dazu. Insbesondere wenn das Transportband in einem Transportsystem verwendet wird, kann es gebogen sein, sodass unterschiedliche Bereiche des Transportbands voneinander unterschiedliche Transportebenen und Transportrichtungen aufweisen können.

Der Begriff "entlang" wird im Sinne der Erfindung gleichbedeutend mit "im Wesentlichen Parallel", als beispielsweise einen Winkel von 0° bis 10°, insbesondere von 0° bis 5°, vorzugsweise von 0° bis 2°, einschließend, verwendet.

Das Transportband umfasst an einer Tragseite des Transportbands zumindest eine entlang der Transportbandebene ausgerichtete Tragfläche zum Tragen der Güter. Die Tragseite ist eine Flächenseite des Transportbands. Im einfachsten Fall ist die Tragfläche dazu ausgelegt, dass die Güter darauf abgelegt werden können. Insbesondere kann die gesamte Tragseite die Tragfläche bilden, um eine möglichst große Fläche zum Tragen der Güter bereitzustellen.

Das Transportband umfasst an einer Führungsseite des Transportbands zumindest eine entlang der Transportbandebene ausgerichtete Führungsfläche zur Führung des Transportbands. Die Führungsseite ist eine Flächenseite des Transportbands. Insbesondere kann die gesamte Führungsseite die Führungsfläche bilden, um eine möglichst große Fläche für eine möglichst präzise und zuverlässige Führung bereitzustellen.

Das Transportband umfasst in der Führungsfläche zumindest eine Nut, beispielsweise ein, zwei, drei, vier oder mehr Nuten, zum Eingriff eines Führungselements zur Führung des Transportbands entlang der Transportrichtung, wobei eine Längsachse der Nut entlang der Transportrichtung ausgerichtet ist. Das Führungselement kann beispielsweise ein, insbesondere zylinderförmiger, Bolzen oder ein mit seiner größten Ausdehnung in Transportrichtung ausgerichteter Steg, beispielsweise mit einer rechteckigen Querschnittsfläche senkrecht zur Transportrichtung, sein.

Vorzugsweise erstreckt sich die zumindest eine Nut über die gesamte Länge der Führungsfläche entlang der Transportrichtung, um eine möglichst zuverlässige Führung sicherzustellen und möglicherweise erhöhte Reibung und/oder erhöhten Verschleiß des Führungselements und/oder des Transportbands an einem Ende der Nut zu verhindern.

Die zumindest eine Nut umfasst zumindest eine Bodenfläche zur Begrenzung einer Eindringtiefe des Führungselements in das Transportband. Durch die Bodenfläche wird ein definierter Anschlag für das Führungselement, insbesondere für ein Führungselement mit beliebige geformtem Ende, bereitgestellt, sodass das Transportband in einem definierten Abstand von dem Führungselement präzise und zuverlässig geführt wird.

Ferner ergibt sich, beispielsweise im Vergleich zu einer v-Form, eine vergrößerte Kontaktfläche zwischen dem Führungselement und der Nut, sodass eine lokale mechanische Belastung von Führungselement und Transportband reduziert wird. Dadurch kann beispielsweise ein weniger verschleißbeständiges Material für das Führungselement oder das Transportband verwendet werden. Das Material kann so beispielsweise zur Kosten- oder Gewichtsreduzierung gewählt werden.

Außerdem ist es bei einer Nut mit einer Bodenfläche, beispielsweise im Vergleich zu einer v-Förmigen Nut, weniger wahrscheinlich, dass sich Fremdkörper in der Nut festsetzen oder dass das Führungselement in der Nut verkantet, was beides den Verschleiß erhöhen würde.

Des Weiteren ist eine Nut mit Bodenfläche bei gleicher Öffnungsbreite und gleichem Flankenwinkel weniger tief als eine v-förmige Nut. Das Transportband wird durch eine Nut mit Bodenfläche somit mechanisch weniger geschwächt und hat eine höhere Lebensdauer und/oder mechanische Belastbarkeit.

Die zumindest eine Nut umfasst zumindest eine schräg zur Transportbandebene angeordnete und die Führungsfläche mit der Bodenfläche verbindende linke Flankenfläche zur linken Seitenführung des Führungselements und zumindest eine schräg zur Transportbandebene angeordnete und die Führungsfläche mit der Bodenfläche verbindende rechte Flankenfläche zur rechten Seitenführung des Führungselements. Dabei ist eine Bodenbreite der Bodenfläche senkrecht zur Transportrichtung kleiner als eine Öffnungsbreite der Nut senkrecht zur Transportrichtung und in einer Ebene mit der Führungsfläche. Die Nut erweitert sich also von der Bodenfläche zur Führungsfläche.

Die Öffnungsbreite kann beispielsweise für praktische Anwendungen vorteilhafterweise 110 % bis 200 %, insbesondere 130 % bis 180 %, der Bodenbreite betragen, wobei die Bodenbreite beispielsweise 2 mm bis 8 mm, insbesondere 3 mm bis 4 mm betragen kann.

Vorzugsweise sind die linke Flankenfläche und die rechte Flankenfläche symmetrisch zu einer die Längsachse der Nut enthaltenen und senkrecht zur Führungsfläche ausgerichteten Mittelebene der Nut angeordnet, wodurch das Führungselement eine gleichmäßige linke und rechte Seitenführung erfährt. Weiterhin ist eine Nut mit symmetrischen Flankenflächen besonders einfach herstellbar, und bei der Montage eines entsprechenden Transportbands muss nicht auf eine korrekte Ausrichtung einer rechten und linken Seite des Transportbands geachtet werden.

Durch eine sich zur Führungsfläche erweiternde Nut wird die Nut und damit das Transportband bei einem Eingreifen des Führungselements lateral zur Transportrichtung automatisch an dem Führungselement ausgerichtet. Das heißt, auch bei Abweichungen der Breite oder Lateralposition des Führungselements von der Breite oder Lateralposition der Bodenfläche der Nut, beispielsweise durch Dehnung oder Stauchung des Transportbands, durch Fertigungstoleranzen oder durch Verschleiß, kann das Führungselement zur zuverlässigen Führung des Transportbands in die Nut eingreifen.

Eine sich zur Führungsfläche erweiternde Nut hat den weiteren Vorteil, dass zwischen dem Führungselement und dem Transportband lateral zur Transportrichtung ein Zwischenraum verbleiben kann, sodass das Führungselement auch bei einer lateralen Stauchung des Transportbands nicht in der Nut eingeklemmt wird.

Erfindungsgemäß hat die Bodenfläche, die linke Flankenfläche und/oder die rechte Flankenfläche, insbesondere jede der genannten Flächen, eine geringere Rauheit als die Führungsfläche. Der Begriff Rauheit bezeichnet insbesondere eine Gestaltabweichung dritter bis fünfter Ordnung bei technischen Oberflächen gemäß der Norm DIN 4760. Die Rauheit kann beispielsweise als Mittenrauwert Rₐ, der dem quadratischen Mittel der Abweichung der Messpunkte auf der Oberfläche zur Mittellinie der Oberfläche entspricht, oder als quadratische Rauheit R_{q}, die dem quadratischen Mittel der Abweichung der Messpunkte von der Mittellinie entspricht, oder als flächenbezogener Rauheitswert Sₐ gemäß der Norm EN ISO 25178 ausgedrückt sein.

Typischerweise hat eine Führungsfläche eines fachüblichen Transportbands eine strukturierte Oberfläche und dadurch eine hohe Rauheit, um zu verhindern, dass die Führungsfläche an einer Umlenkrolle oder einer Antriebsrolle des Transportsystems anhaftet. Insbesondere in der zumindest einen Nut kann eine strukturiere Oberfläche jedoch eine Ablagerung von Fremdkörpern und eine Ansiedlung von Mikroorganismen fördern und eine hygienische Reinigung des Transportbandes erschweren, was insbesondere für eine Verwendung des Transportbandes in der Lebensmittelverarbeitung problematisch ist.

Eine gegenüber der Führungsfläche verringerte Rauheit in der zumindest einen Nut führt daher zu einer verbesserten Reinhaltung und leichteren hygienischen Reinigung des Transportbandes. Versuche haben ergeben, dass es für typische Transportbänder besonders vorteilhaft ist, wenn die Rauheit der Bodenfläche, der linken Flankenfläche und/oder der rechten Flankenfläche beispielsweise 0,5 % bis 50 %, insbesondere 1 % bis 10 %, der entsprechenden Rauheit der Führungsfläche beträgt.

Vorzugsweise ist die Bodenfläche entlang der Transportbandebene ausgerichtet. Dadurch ist die Eindringtiefe des Führungselements in die Nut über die gesamte Bodenfläche gleich, sodass eine besonders zuverlässige Führung ermöglicht wird.

Die linke Flankenfläche kann in einem linken Übergangsbereich, und die rechte Flankenfläche kann in einem rechten Übergangsbereich in die Bodenfläche übergehen, wobei der linke Übergangsbereich und/oder der rechte Übergangsbereich als Kante ausgebildet sein kann. Eine Kante bietet den Vorteil, dass Sie im Gegensatz zu einem abgerundeten Übergang eine laterale Bewegung des Führungselements entlang der Transportebene senkrecht zur Transportrichtung aus der Nut heraus hemmt. Dadurch wird insbesondere bei lateraler Belastung, beispielsweise wenn das Transportband um eine Kurve geführt wird, eine besonders zuverlässige Führung erreicht.

Wenn die Flankenflächen jeweils an einer Kante in die Bodenfläche übergehen, können beispielsweise die Bodenfläche und die Flankenflächen plan und somit einfach und kostengünstig herstellbar sein. Sind Bodenfläche und Kantenflächen plan, ergibt sich daraus eine Nut mit einer trapezförmigen Querschnittsfläche senkrecht zur Transportrichtung.

Vorzugsweise sind die Bodenfläche, die linke Flankenfläche und/oder die rechte Flankenfläche, insbesondere zumindest die beiden Flankenflächen, plan, also nicht gewölbt, sodass sie, insbesondere mit subtraktiven Verfahren, beispielsweise durch Fräsen, einfach und kostengünstig hergestellt werden können. Ferner bilden plane Flächen mit üblichen Führungselementen mit rechteckigem Querschnitt besonders große Kontaktflächen, was die Führung verbessert und die lokale Materialbelastung reduziert.

Beispielsweise zur Anpassung an ein abgerundetes Führungselement, können die Bodenfläche, die linke Flankenfläche und/oder die rechte Flankenfläche gewölbt, vorzugsweise um die Längsachse zur Nut hin konkav gewölbt, sein. Vorzugsweise ist zumindest die Bodenfläche um die Längsachse zur Nut hin konkav gewölbt.

In einer besonders vorteilhaften Ausgestaltung sind die Flankenflächen plan und die Bodenfläche ist um die Längsachse zur Nut hin konkav gewölbt. Eine solche Form der Nut lässt sich, beispielsweise durch schleifen oder fräsen besonders einfach herstellen. Außerdem ist es so möglich, dass die Flankenflächen ohne Kanten, an denen es zu einer Ansammlung von Fremdkörpern oder einer erhöhten Materialbelastung kommen könnte, in die Bodenfläche übergehen.

In einer Ausgestaltung der Übergangsbereiche Ausgestaltung wird ferner vorgeschlagen, dass der linke Übergangsbereich und der rechte Übergangsbereich abgerundet, also ohne Kanten, ausgebildet sind. Durch den Verzicht auf Kanten in der zumindest einen Nut wird eine mögliche Ansammlung von Fremdkörpern oder eine erhöhte Materialbelastung im Kantenbereich vermieden.

Um die Bodenfläche mit der Führungsfläche zu verbinden, müssen die Flankenflächen und/oder die Bodenfläche in der Ausgestaltung ohne Kanten in der Nut gewölbt sein. Vorzugsweise ist nur die Bodenfläche gewölbt, um die Nut besonders einfach herstellen zu können.

Alternativ ist auch denkbar, dass nur die Flankenflächen gewölbt sind und die Bodenfläche plan ist, um die oben genannten Vorteile einer planen Bodenfläche zu ermöglichen. Zur Längsachse der Nut hin konkav gewölbte Flankenflächen haben außerdem den Vorteil, dass eine Steigung der Flankenflächen von der Bodenfläche zur Führungsfläche hin zunimmt. Durch die nach außen zunehmende Steigung der Flankenflächen ist die von einem Führungselement auf das Transportband ausgeübte Führungskraft quer zur Transportrichtung umso höher, je weiter das Transportband aus seiner vorgesehenen Position relativ zu dem Führungselement ausgelenkt wird. Somit wird durch die geringe Steigung in der Nähe der Bodenfläche eine geringe Reibung und ein geringer Verschleiß sichergestellt, solange das Transportband an seiner vorgesehenen Position läuft. Andererseits wird durch die hohe Steigung am Rand der Nut nahe der Führungsfläche eine starke und zuverlässige Führung sichergestellt, wenn das Transportband aus seiner vorgesehenen Position auszubrechen droht.

Insbesondere können in der Ausgestaltung ohne Kanten in der Nut die Flankenflächen und die Bodenfläche gewölbt sein, sodass sich beispielsweise eine Nut mit einem Querschnitt senkrecht zur Transportrichtung in Form eines Kreissektors, beispielsweise eines Halbkreises ergibt. Ein Querschnitt in Form eines Kreissektors bietet den Vorteil einer besonders gleichmäßigen Verteilung mechanischer Belastungen und somit eines geringen Verschleißes.

Die linke Flankenfläche schließt mit der rechten Flankenfläche vorzugsweise einen Flankenwinkel ein, wobei der Flankenwinkel von 60° bis 120°, bevorzugt von 80° bis 100°, insbesondere von 85° bis 95°, beträgt.. Einerseits erlaubt ein großer Flankenwinkel, also eine hohe Steigung der Flankenflächen von der Bodenfläche zur Führungsfläche, eine besonders zuverlässige Seitenführung des Führungselements in der Nut und verringert die Gefahr, dass das Führungselement bei einer Stauchung des Transportbands aus der Nut herausgedrückt wird.

Andererseits kommen die oben beschriebenen Vorteile einer sich zur Führungsfläche erweiternden Nut besonders bei einem großen Flankenwinkel, also einer geringen Steigung der Flankenflächen von der Bodenfläche zur Führungsfläche, zum Tragen. Für praktische Anwendungen hat sich zwischen diesen gegensätzlichen Anforderungen ein Flankenwinkel von 60° bis 120°, bevorzugt von 80° bis 100°, insbesondere von 85° bis 95°, als besonders vorteilhaft erwiesen.

Vorzugsweise liegt die Tragseite der Führungsseite bezüglich der Transportbandebene gegenüber. Wenn die Tragseite nicht mit der Führungsseite zusammenfällt, ergibt sich daraus der Vorteil, dass die Tragseite ohne Nuten ausgestaltet werden kann, sodass sie besonders einfach zu reinigen und/oder zu desinfizieren ist, was insbesondere für den Transport von Gütern mit hohen Hygieneanforderungen, beispielsweise Lebensmitteln, von Vorteil ist. Liegen Tragseite und Führungsseite einander gegenüber, können dadurch Tragseite und Führungsseite von jeweils einer der Flächenseiten des Transportbands gebildet werden, sodass sowohl zum Tragen der Güter als auch zur Führung des Transportbands eine möglichst große Fläche zur Verfügung steht.

Das Transportband kann zumindest eine sich in Transportrichtung länglich erstreckende und bezüglich der Transportrichtung neben der zumindest einen Nut angeordnete Materialschwächung umfassen. Durch die Materialschwächung kommt es im Fall einer Zug- oder Druckbelastung des Transportbands, insbesondere entlang der Transportebene senkrecht zur Transportrichtung, beispielsweise wenn das Transportband um eine Kurve geführt oder gespreizt wird, hauptsächlich im Bereich der Materialschwächung zu einer Verformung des Transportbands. Die Nut wird folglich nur geringfügig verformt, sodass weiterhin eine präzise Führung des Transportbands ohne ein Einklemmen des Führungselements in der Nut möglich ist.

Die Materialschwächung kann beispielsweise als Verdünnung des Transportbands, als Perforierung des Transportbands und/oder als Material des Transportbands mit geringerer Steifigkeit als außerhalb der Materialschwächung ausgestaltet sein.

Das Transportband kann zumindest eine die zumindest eine Nut enthaltende Führungsschicht und zumindest eine die Tragfläche bildende Tragschicht umfassen. Durch einen mehrschichtigen Aufbau können die Materialeigenschaften der einzelnen Schichten für unterschiedliche Anforderungen optimiert werden. So kann beispielsweise die Führungsschicht aus einem Material bestehen, in das sich die Nut einfach einbringen lässt und/oder das einen geringen Reibungskoeffizienten gegenüber dem Führungselement aufweist. Die Tragschicht kann beispielsweise aus einem Material bestehen, das sich leicht reinigen und/oder desinfizieren lässt und/oder eine hohe Tragfähigkeit des Transportbands ermöglicht.

Zwischen der Führungsschicht und der Tragschicht kann eine Verstärkungsschicht angeordnet sein, die beispielsweise aus einem Material mit hoher Steifigkeit und/oder Festigkeit bestehen kann, um eine hohe Tragfähigkeit sicherzustellen und plastische Verformungen des Transportbands, die es unbrauchbar machen können, zu verhindern.

Die Schichten sind vorzugsweise entlang der Transportebene angeordnet und/oder fest, insbesondere stoffschlüssig, miteinander verbunden, beispielsweise miteinander verklebt und/oder verschweißt.

Für eine besonders einfache Herstellbarkeit kann die Bodenfläche von einer im Bereich der Nut freigelegten Grenzfläche zwischen der Führungsschicht und der Verstärkungsschicht oder der Tragschicht gebildet sein. In diesem Fall kann das Transportband beispielsweise durch Einbringen der zumindest einen Nut als durchgehender Spalt in der Führungsschicht vor oder nach einem Verbinden der Führungsschicht mit der Verstärkungsschicht oder der Tragschicht hergestellt werden.

Das Transportband kann zumindest einen bei den vorgesehenen Einsatzbedingungen des Transportbandes elastischen Kunststoff, beispielsweise ein Polyurethan, bevorzugt einen verstärkten, besonders bevorzugt faserverstärkten, Kunststoff, umfassen oder daraus bestehen. Insbesondere können die Schichten des Transportbands unterschiedliche Kunststoffe umfassen oder daraus bestehen. Beispielsweise kann die Verstärkungsschicht einen faserverstärkten Kunststoff umfassen.

Besonders bevorzugt ist es, dass das Transportband eine homogene Materialzusammensetzung, also keine Schichten aus unterschiedlichen Materialien, aufweist. Dadurch werden mögliche Verbindungsprobleme an Grenzflächen zwischen unterschiedlichen Materialien ausgeschlossen, und das Transportband ist besonders einfach herstellbar. Das Transportband kann beispielsweise monolithisch aus genau einem Kunststoff, insbesondere einem Polyurethan, bestehen.

Die Führungsschicht des Transportbands kann ein gegenüber der oder den anderen Schichten des Transportbands, beispielsweise durch eine thermische Behandlung und/oder eine Druckbehandlung, verdichtetes Material umfassen. Dadurch wird eine thermische und/oder mechanische Widerstandsfähigkeit der Führungsschicht erhöht, sodass die Führungsfläche, insbesondere eine Oberflächenstruktur der Führungsfläche, bei einem Einbringen der zumindest einen Nut und/oder bei einem Glätten der Bodenfläche, der linken Flankenfläche und/oder der rechten Flankenfläche der zumindest einen Nut beschädigt wird.

Das Transportbandelement kann zumindest zwei Nuten gemäß einer erfindungsgemäßen Ausgestaltung umfassen, wobei ein Abstand der Nuten senkrecht zur Transportrichtung entlang der Transportbandebene größer oder gleich der Öffnungsbreite und/oder einer Nuttiefe senkrecht zur Transportbandebene zumindest einer der zwei Nuten ist. Dadurch, dass die Nuten mit ausreichendem Abstand voneinander angeordnet sind, entsteht zwischen den Nuten eine ausreichend große Antriebsfläche, an der beispielsweise eine Antriebswalze zum Antrieb des Transportbands mit ausreichender Traktion angreifen kann. Vorzugsweise ist die Antriebsfläche plan.

Eine Nuttiefe der zumindest einen Nut senkrecht zur Transportbandebene beträgt vorzugsweise zumindest 30 %, bevorzugt zumindest 50 %, besonders bevorzugt zumindest 70 %, einer Transportbanddicke senkrecht zur Transportbandebene. Dadurch kann eine besonders zuverlässige Führung erreicht werden.

Ein erfindungsgemäßes Transportsystem umfasst ein elastisches Transportband zum Transportieren von Gütern in einer Transportrichtung entlang einer Transportbandebene des Transportbands.

Das Transportband des Transportsystems ist ein erfindungsgemäßes Transportband, woraus sich die dazu beschriebenen Vorteile und Ausgestaltungsmöglichkeiten ergeben.

Das Transportsystem kann zumindest ein Führungselement umfassen, wobei das Führungselement zur Führung des Transportbands entlang der Transportrichtung in die zumindest eine Nut des Transportbands eingreift. Beispielsweise kann das Transportband so an dem Führungselement vorbeigeführt werden, dass das Führungselement in die zumindest eine Nut eingreift.

Das Transportband umfasst vorzugsweise eine Mehrzahl von Nuten, beispielsweise 2 bis 20 Nuten, insbesondere 5 bis 15 Nuten, wobei das Transportsystem zu jeder Nut zumindest ein Führungselement umfasst, das zur Führung des Transportbands entlang der Transportrichtung in die jeweilige Nut eingreift. Durch eine Mehrzahl von Nuten kann eine zuverlässige Seitenführung des Transportbandes mit einer geringeren Materialbelastung und/oder einer geringeren Nuttiefe erreicht werden als mit einer einzelnen Nut, sodass sich die Lebensdauer des Transportbandes und der Führungselemente erhöht. Allerdings müssen die Nuten für ein klemmfreies und reibungsarmes Zusammenwirken mit den zugehörigen Führungselementen exakt an den Führungselementen ausgerichtet sein, sodass das Transportband und die Führungselemente präzise gefertigt und in dem Transportsystem angeordnet sein müssen. Weiterhin kann eine in einem Montagezustand exakte Ausrichtung auch beim Betrieb des Transportsystems verloren gehen, wenn sich das Transportband beispielsweise durch eine von den transportierten Gütern oder von einem Antrieb des Transportbandes verursachte mechanische Belastung verformt.

Das zumindest eine Führungselement ist vorzugsweise in einem Montagezustand des Transportbandes von der linken Flankenfläche, der Bodenfläche und/oder der rechten Flankenfläche, insbesondere von beiden Flankenflächen und der Bodenfläche, der zumindest einen Nut beabstandet. Unter Montagezustand wird erfindungsgemäß ein Zustand verstanden, in dem das Transportband in dem Transportsystem montiert, aber nicht durch transportierte Güter oder einen Antrieb des Transportbandes mechanisch belastet ist.

Durch die Beabstandung wird sichergestellt, dass die Nut auch bei einer nicht exakten Positionierung der Nut relativ zu dem Führungselement, insbesondere bei einer Mehrzahl von Nuten und/oder bei einer Verformung des Transportbandes unter Last, klemmfrei und reibungsarm mit dem Führungselement zusammenwirken kann. Weiterhin wird verhindert, dass das Führungselement in das Transportband einschneidet.

Für praktische Anwendungen hat sich beispielsweise ein Abstand zwischen dem Führungselement und zumindest einer der Flankenflächen, insbesondere zu beiden Flankenflächen, von (jeweils) 5 % bis 50 %, insbesondere 10 % bis 30 %, der Öffnungsbreite der Nut als besonders vorteilhaft erwiesen. Ferner hat sich ein Abstand zwischen dem Führungselement und der Bodenfläche von 5 % bis 50 %, insbesondere 10 % bis 30 %, der Nuttiefe der Nut als besonders vorteilhaft erwiesen.

Das zumindest eine Führungselement verjüngt sich vorzugsweise auf des Transportband zu mit einem Öffnungswinkel, wobei der Öffnungswinkel bevorzugt kleiner als ein Flankenwinkel der zumindest einen Nut ist und/oder von 30° bis 90°, besonders bevorzugt von 40° bis 60°, beträgt. Wenn der Öffnungswinkel kleiner als der Flankenwinkel ist, beispielsweise 40 % bis 80 %, insbesondere 50 % bis 60 %, des Flankenwinkels beträgt, kann das Führungselement besonders einfach in die Nut eingeführt werden und verklemmt dort, insbesondere bei einer Verformung des Transportbandes, nicht.

Das Führungselement kann sich beispielsweise v-förmig, insbesondere mit einer abgestumpften Spitze, verjüngen. Eine v-förmige Spitze ist besonders einfach in die Nut einführbar. Eine abgestumpfte Spitze verringert vorteilhafterweise die Gefahr eines Einschneidens des Führungselements in das Transportband.

Das Führungselement kann als Führungsbolzen oder Führungssteg ausgebildet und bevorzugt auf einer Mantelfläche einer Walze zum Umlenken und/oder zum Antrieb des Transportbands und/oder auf einer Auflagefläche für das Transportband angeordnet sein. Insbesondere kann das Führungselement als in Umfangsrichtung verlaufender Mantelsteg der Walze ausgestaltet sein. Hierdurch kann eine besonders einfach zu bauende und sehr betriebssichere Spurführung des Transportbands an der Walze erzielt werden.

Das erfindungsgemäße Verfahren nach Anspruch 11 dient zur Herstellung eines erfindungsgemäßen Transportbandes.

Das Verfahren umfasst ein Bereitstellen eines Rohlings für das Transportband mit zumindest einer entlang einer Transportbandebene des Transportbands ausgerichteten Führungsfläche zur Führung des Transportbands an der Führungsseite des Transportbandes. Bei dem Rohling kann es sich insbesondere um ein fachübliches Transportband handeln.

Das Verfahren umfasst, insbesondere nach dem Bereitstellen, ein Einbringen zumindest einer Nut zum Eingriff eines Führungselements zur Führung des Transportbands in die zumindest eine Führungsfläche, wobei eine Längsachse der Nut entlang der Transportrichtung ausgerichtet ist.

Das Verfahren umfasst, insbesondere während und/oder nach dem Einbringen, ein Glätten einer Bodenfläche, einer linken Flankenfläche und/oder einer rechten Flankenfläche, insbesondere der Bodenfläche und der beiden Flankenflächen, der zumindest einen Nut. Das Glätten erzeugt vorteilhafterweise eine Oberfläche mit einer gegenüber der Führungsfläche reduzierten Rauheit, woraus sich die entsprechenden, zuvor beschriebenen Vorteile ergeben.

Das Einbringen der Nut umfasst vorzugsweise eine spanende Bearbeitung der Führungsfläche, insbesondere ein Fräsen und/oder ein Schleifen der zumindest einen Nut in die zumindest eine Führungsfläche. Durch eine spanende Bearbeitung lässt sich die Nut besonders schnell, einfach und kostengünstig erzeugen. Eine spanende Bearbeitung hat jedoch den Nachteil, dass sich von dem Transportband abgetragenes Material, beispielsweise in Form von Partikeln und/oder Spänen, auf dem Transportband, insbesondere in der zumindest einen Nut, ablagern kann. Dadurch kann die Rauheit der Flächen in der Nut erhöht werden, was die Führung eines Führungselements in der Nut beeinträchtigen und die Ablagerung von Fremdkörpern und Mikroorganismen in der Nut begünstigen kann.

Ein Fräsen hat den besonderen Vorteil, dass sich die Nut damit mit vergleichbarem Aufwand präziser fertigen lässt, und dass sich in der Regel weniger abgetragenes Material in der Nut ablagert, als bei einem Schleifen. Weiterhin haben die Bodenfläche und die Flankenflächen einer durch Fräsen erzeugten Nut typischerweise eine geringere Rauheit als bei einer durch Schleifen erzeugten Nut.

Das Einbringen der Nut kann beispielsweise eine Laser-Ablation der Führungsfläche umfassen. Eine Laser-Ablation hat die Vorteile, dass sich die Nut sehr präzise und mit besonders glatter Bodenfläche und Flankenflächen fertigen lässt. Nachteilig sind jedoch die hohen Investitionskosten für eine Laser-Bearbeitungsstation und die im Verhältnis zu einem Fräsen oder Schleifen geringe Geschwindigkeit des Materialabtrags.

Das Verfahren umfasst vorzugsweise ein mechanisches Entfernen von durch das Einbringen abgetragenem Material von dem Transportband, beispielsweise durch ein Abbürsten, Absaugen und/oder Abblasen des Materials. Das Entfernen erfolgt während und/oder nach dem Einbringen und vorzugsweise vor dem Glätten. Erfolgt das Entfernen vor dem Glätten, muss bei dem Glätten weniger Material geglättet werden, sodass das Glätten schneller und effizienter erfolgen kann.

Das Glätten umfasst vorzugsweise ein Erhitzen zumindest der Bodenfläche, der linken Flankenfläche und/oder der rechten Flankenfläche der zumindest einen Nut mit einer Wärmeintensität, also einer bestimmten eingebrachten Wärmeleistung pro Flächeneinheit. Vorzugsweise werden alle genannten Flächen der zumindest einen Nut, insbesondere auch die Führungsfläche des Transportbands, erhitzt.

Die Wärmeintensität führt vorzugsweise zu einem Erhitzen von bei dem Einbringen abgetragenem Material, das sich beispielsweise in der Nut abgelagert hat, über eine Glasübergangstemperatur, Schmelztemperatur und/oder Zersetzungstemperatur des Materials. Beim Überschreiten der Glasübergangstemperatur geht ein festes Glas oder Polymer in einen gummiartigen bis zähflüssigen Zustand über. Durch das Erhitzen kann somit bei dem Einbringen abgetragenes Material, das sich in der Nut abgelagert hat, aufgeweicht, angeschmolzen und/oder entfernt werden, sodass die Bodenfläche, die linke Flankenfläche und/oder die rechte Flankenfläche geglättet wird.

Die Wärmeintensität führt vorzugsweise zu einem Erhitzen der Führungsfläche auf eine Temperatur unterhalb einer Glasübergangstemperatur, Schmelztemperatur und/oder Zersetzungstemperatur des Materials. Dadurch wird verhindert, dass die Führungsfläche, insbesondere eine an die zumindest eine Nut angrenzender Kante der Führungsfläche, thermisch verformt wird, wodurch eine Oberflächenstruktur der Führungsfläche zerstört und/oder die Kante verrundet werden könnte, was ein Ausbrechen eines Führungselements aus der zumindest einen Nut begünstigen könnte.

Aufgrund des höheren Verhältnis von Oberfläche zu Volumen des abgetragenen Materials relativ zu der Führungsfläche erwärmt sich das abgetragene Material leichter als die Führungsfläche. Daher ist es möglich, eine geeignete Wärmeintensität auszuwählen, die zu einem Glätten der Bodenfläche, der linken Flankenfläche und/oder der rechten Flankenfläche führt, ohne dass es zu einer thermischen Verformung der Führungsfläche kommt.

Zum Glätten eines Transportbandes aus einem Polyurethan hat sich beispielsweise eine Wärmeintensität eines Heißluftgebläses mit einer Lufttemperatur von 120 °C bis 180 °C, insbesondere 140 °C bis 160 °C, als besonders vorteilhaft erwiesen.

Das Erhitzen kann beispielsweise ein globales Erhitzen der Bodenfläche, der linken Flankenfläche und der rechten Flankenfläche der zumindest einen Nut und der Führungsfläche, beispielsweise mit einem Heißluftgebläse, einer Infrarot-Leuchte und/oder einer Plasmaquelle, umfassen. Ein globales Erhitzen hat den Vorteil, dass es nicht zu thermisch induzierten Verspannungen oder Verformungen des Transportbands durch ein inhomogenes Erhitzen des Transportbands kommt. Insbesondere für ein Transportband aus einem Thermoplasten, beispielsweise einem Polyurethan, hat sich ein globales Erhitzen als vorteilhaft herausgestellt, um unkontrollierte Verformungen des Transportbandes zu vermeiden.

Ein globales Erhitzen hat außerdem den Vorteil, dass es technisch einfach umzusetzen ist, wobei jedoch die Wärmeintensität genau gesteuert sein muss, um eine thermische Verformung der Führungsfläche zu verhindern.

Ein Heißluftgebläse hat den besonderen Vorteil, dass durch den heißen Luftstrom neben dem Erhitzen auch ein Entfernen von abgetragenem Material erfolgen kann.

Das Erhitzen kann beispielsweise ein selektives Erhitzen von Flächen der zumindest einen Nut gegenüber der Führungsfläche, beispielsweise mit einem Laser und/oder einer Plasmaquelle umfassen. Ein selektives Erhitzen hat den Vorteil, dass eine thermische Verformung der Führungsfläche vermieden wird. Zum selektiven Erhitzen sind jedoch technisch aufwändigere Erhitzungsvorrichtungen notwendig als für ein globales Erhitzen.

Nach dem Erhitzen erfolgt vorzugsweise ein kontrolliertes Abkühlen, wobei insbesondere eine Abkühlgeschwindigkeit so gering gewählt ist, dass keine Verspannungen in dem Transportband durch ein zu schnelles Abkühlen entstehen. Das Abkühlen kann beispielsweise erfolgen, indem das Transportband durch einen Kühltunnel geführt wird.

Insbesondere wenn das Transportband nach dem Einbringen der zumindest einen Nut erhitzt wird, kann es dabei zu einer Dehnung des Transportbandes in Transportrichtung und damit einhergehender Stauchung des Transportbandes quer zur Transportrichtung kommen, wodurch sich eine Breite der Nut unter verringern kann. Eine Einbringbreite der zumindest einen Nut, die bei dem Einbringen der Nut erzeugt wird, ist daher vorzugsweise größer als eine entsprechende Soll-Breite der Nut, die für den Betrieb des Transportbands vorgesehen ist.

### Kurze Beschreibung der Zeichnungen

Weitere Vorteile, Ziele und Eigenschaften der Erfindung werden anhand nachfolgender Beschreibung und anliegender Zeichnungen erläutert. Merkmale, welche in den Figuren wenigstens im Wesentlichen hinsichtlich ihrer Funktion übereinstimmen, können hierbei mit gleichen Bezugsziffern gekennzeichnet sein, wobei diese Merkmale nicht in allen Figuren beziffert und erläutert sein müssen.

Es zeigen:
[Fig.1] eine schematische Darstellung einer erfindungsgemäßen Ausgestaltung eines Transportbands;
[Fig.2] eine schematische Darstellung einer weiteren erfindungsgemäßen Ausgestaltung eines Transportbands;
[Fig.3] eine schematische Darstellung eines Transportbands mit einer alternativen Ausgestaltung der Übergangsbereiche;
[Fig.4] eine schematische Darstellung einer weiteren erfindungsgemäßen Ausgestaltung eines Transportbands; und
[Fig.5] eine schematische Darstellung einer erfindungsgemäßen Ausgestaltungeines Transportsystems.

### Fig.1

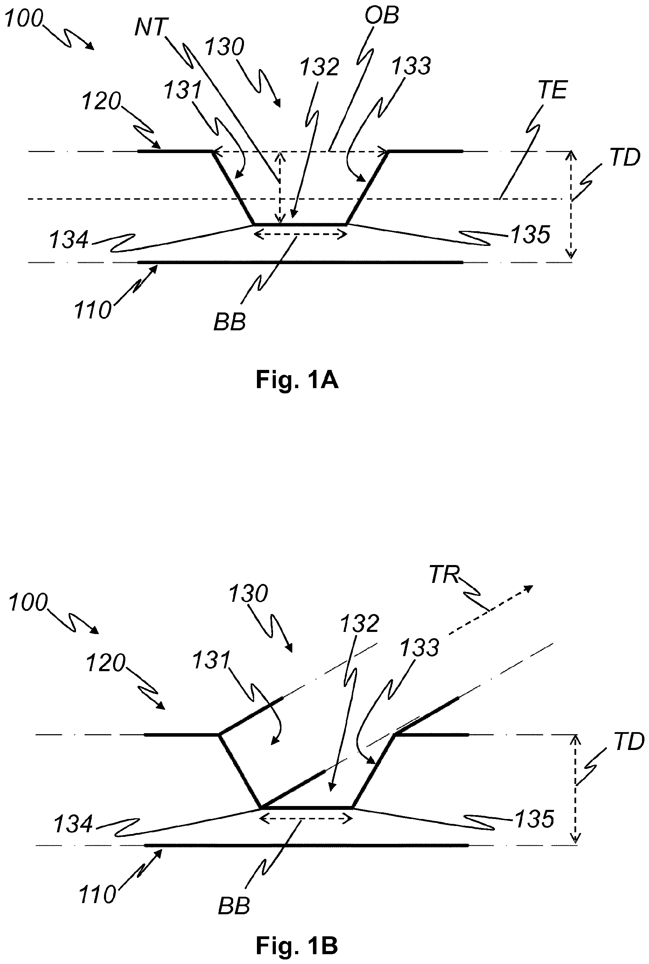

[Fig.1] zeigt eine schematische Darstellung einer erfindungsgemäßen Ausgestaltung eines Transportbands 100 als Querschnitt (Fig.1A) und als perspektivischen Anschnitt (Fig.1B). Das Transportband 100 ist für ein Transportsystem (nicht dargestellt) zum Transportieren von Gütern (nicht dargestellt) in einer Transportrichtung TR entlang einer Transportbandebene TE des Transportbands 100 ausgelegt. In der Querschnittsdarstellung liegen die Transportebene TE und die Transportrichtung TR senkrecht zur Zeichenebene.

Das Transportband 100 umfasst an einer Tragseite des Transportbands 100 eine entlang der Transportbandebene TE ausgerichtete Tragfläche 110 zum Tragen der Güter und an einer Führungsseite des Transportbands 100 eine entlang der Transportbandebene TE ausgerichtete Führungsfläche 120 zur Führung des Transportbands 100. Die Tragseite liegt beispielsweise der Führungsseite bezüglich der Transportbandebene TE gegenüber.

In der Führungsfläche 120 ist eine Nut 130 zum Eingriff eines Führungselements (nicht dargestellt), wobei eine Längsachse (nicht dargestellt) der Nut 130 entlang der Transportrichtung TR ausgerichtet ist.

Die Nut 130 umfasst eine Bodenfläche 132 zur Begrenzung einer Eindringtiefe des Führungselements 210 in das Transportband 100 und eine schräg zur Transportbandebene angeordnete und die Führungsfläche 120 mit der Bodenfläche 132 verbindende linke Flankenfläche 131 und zumindest eine schräg zur Transportbandebene TE angeordnete und die Führungsfläche 120 mit der Bodenfläche 132 verbindende rechte Flankenfläche 133.

Eine Bodenbreite BB der Bodenfläche 132 senkrecht zur Transportrichtung TR ist kleiner als eine Öffnungsbreite OB der Nut 130 senkrecht zur Transportrichtung TR und in einer Ebene mit der Führungsfläche 120.

Eine Nuttiefe NT der Nut 130 senkrecht zur Transportbandebene TE beträgt beispielsweise zumindest 50 % einer Transportbanddicke TD senkrecht zur Transportbandebene TE.

Die Bodenfläche 132 ist beispielsweise plan und entlang der Transportbandebene TE ausgerichtet, wobei die linke Flankenfläche 131 an einem linken Übergangsbereich 134 und die rechte Flankenfläche 133 an einem rechten Übergangsbereich 135 jeweils in Form einer Kante in die Bodenfläche 132 übergehen.

Vorzugsweise sind die linke Flankenfläche 131 und die rechte Flankenfläche 133 plan.

In der dargestellten Ausgestaltung hat die Nut 130 beispielsweise einen trapezförmigen Querschnitt senkrecht zur Transportrichtung TR.

### Fig.2

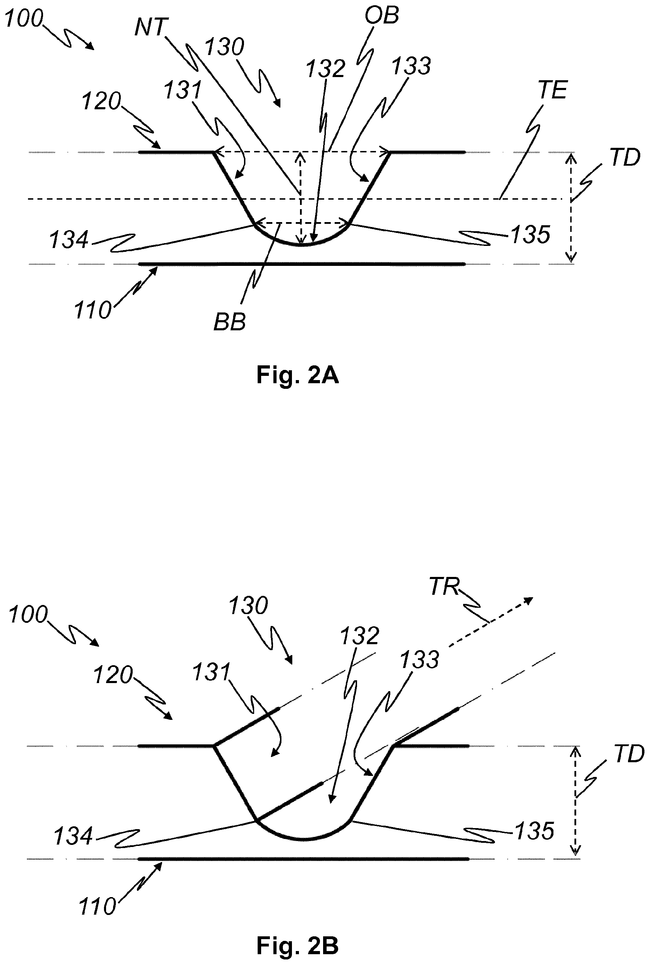

[Fig.2] zeigt eine schematische Darstellung einer weiteren erfindungsgemäßen Ausgestaltung eines Transportbands 100 als Querschnitt (Fig.2A) und als perspektivischen Anschnitt (Fig.2B). In der Querschnittsdarstellung liegen die Transportebene TE und die Transportrichtung TR senkrecht zur Zeichenebene.

Das in Figur 2 dargestellte Transportband 100 unterscheidet sich von dem in Figur 1 dargestellten Transportband 100 darin, dass die Bodenfläche 132 nicht plan, sondern um die Längsachse der Nut 130 konkav zur Nut 130 hin gewölbt ist.

Dadurch ist es möglich, die Übergangsbereiche 134, 135 nicht wie dargestellt als Kanten, sondern abgerundet auszugestalten.

### Fig.3

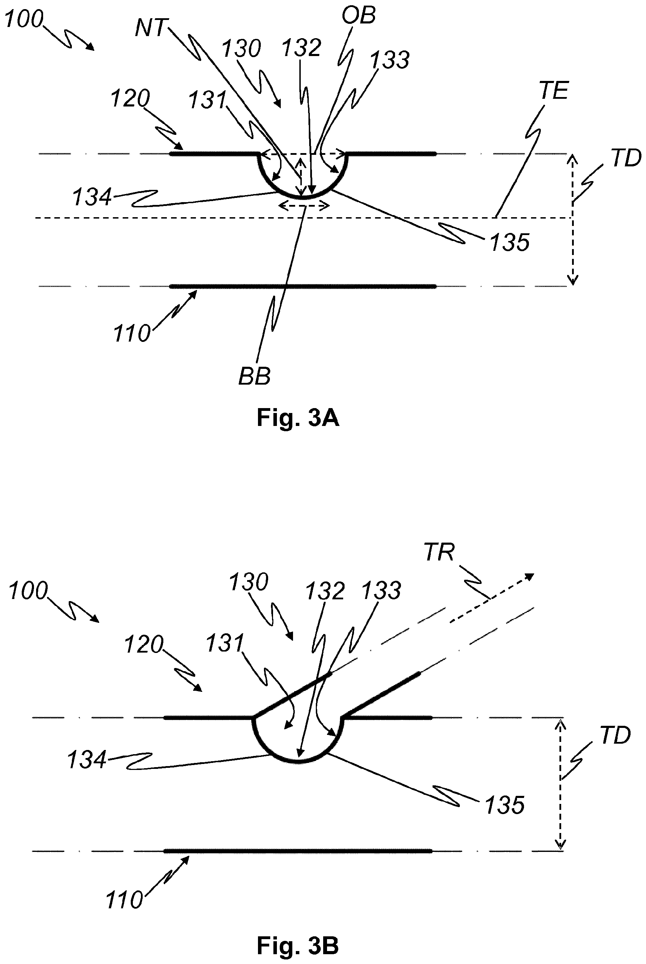

[Fig.3] zeigt eine schematische Darstellung einer Ausgestaltung eines Transportbands 100 mit einer alternativen Ausgestaltung der Übergangsbereiche 134, 135 als Querschnitt (3A) und als perspektivischen Anschnitt (3B). In der Querschnittsdarstellung liegen die Transportebene TE und die Transportrichtung TR senkrecht zur Zeichenebene.

Das in Figur 3 dargestellte Transportband 100 unterscheidet sich von dem in Figur 2 dargestellten Transportband 100 darin, dass die linke Seitenfläche 131 und die rechte Seitenfläche 133 nicht plan, sondern um die Längsachse der Nut 130 konkav zur Nut 130 hin gewölbt sind.

Ferner sind der linke Übergangsbereich 134 und der rechte Übergangsbereich 135 jeweils nicht als Kante, sondern abgerundet ausgestaltet.

In der dargestellten Ausgestaltung hat die Nut 130 beispielsweise einen halbkreisförmigen Querschnitt senkrecht zur Transportrichtung TR.

### Fig.4

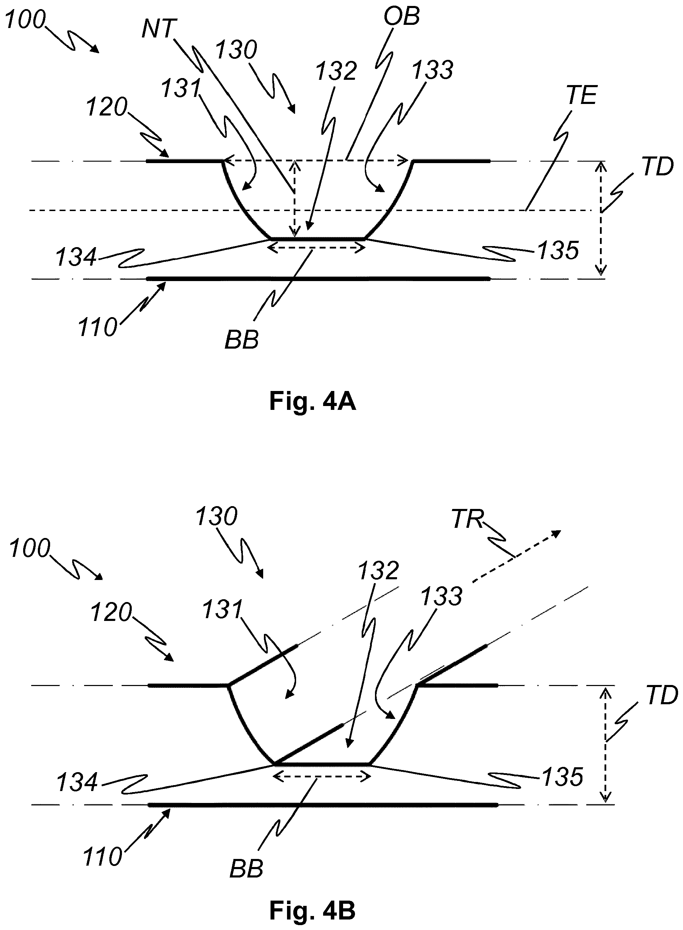

[Fig.4] zeigt eine schematische Darstellung einer weiteren erfindungsgemäßen Ausgestaltung eines Transportbands 100 als Querschnitt (Fig.4A) und als perspektivischen Anschnitt (Fig.4B).

Das in Figur 4 dargestellte Transportband 100 unterscheidet sich von dem in Figur 1 dargestellten Transportband 100 darin, dass die linke Flankenfläche 131 und die rechte Flankenfläche 133 nicht plan, sondern um die Längsachse zur Nut (130) hin konkav gewölbt sind.

Dadurch ist es möglich, die Übergangsbereiche 134, 135 nicht wie dargestellt als Kanten, sondern abgerundet auszugestalten.

### Fig.5

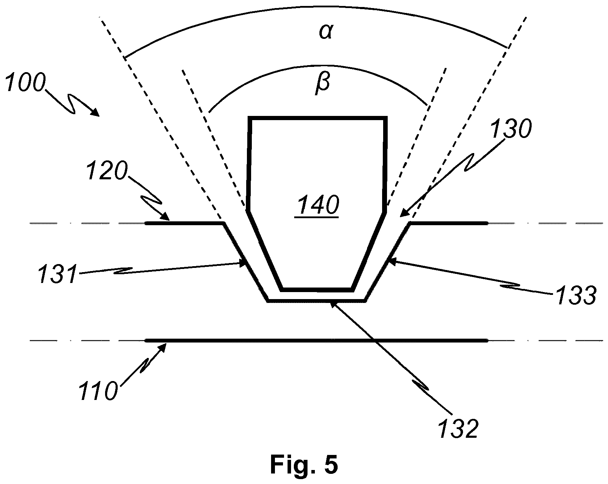

[Fig.5] zeigt eine schematische Darstellung einer erfindungsgemäßen Ausgestaltung eines Transportsystems mit einem erfindungsgemäßen Transportband 100 und einem Führungselement 140 als Querschnitt. Das Führungselement 140, beispielsweise ein in Umfangsrichtung um eine Antriebswalze oder Umlenkwalze verlaufender Mantelsteg, greift zur Führung des Transportbands 100 entlang der Transportrichtung TR in die zumindest eine Nut 130 des Transportbands 100 ein.

Das in Figur 5 dargestellte Transportband 100 entspricht beispielsweise dem in Figur 1 dargestellten Transportband 100, wobei der Übersichtlichkeit halber nicht alle Merkmale erneut mit Bezugszeichen versehen sind.

Die linke Flankenfläche 131 und die rechte Flankenfläche 133 schließen einen Flankenwinkel α ein, der beispielsweise 90° beträgt.

Das Führungselement 140 ist beispielsweise sich auf das Transportband 100 zu mit einem Öffnungswinkel β verjüngend, insbesondere sich v-förmig mit einer abgestumpften Spitze verjüngend, ausgestaltet. Der Öffnungswinkel β ist vorzugsweise kleiner als der Flankenwinkel α und beträgt beispielsweise 50°.

Vorzugsweise ist das Führungselement 140 in einem Montagezustand des Transportbandes von der linken Flankenfläche 131, der Bodenfläche 132 und der rechten Flankenfläche 133 der Nut 130 beabstandet.

### Liste der Bezugszeichen

100 Transportband
110Tragfläche
120 Führungsfläche
130 Nut
131 linke Flankenfläche
132 Bodenfläche
133 rechte Flankenfläche
134 linker Übergangsbereich
135 rechter Übergangsbereich
140 Führungselement
BB Bodenbreite
NT Nuttiefe
OB Öffnungsbreite
TD Transportbanddicke
TE Transportbandebene
TR Transportrichtung
α Flankenwinkel
β Öffnungswinkel

## Patentansprüche

1. Elastisches Transportband (100) für ein Transportsystem zum Transportieren von Gütern in einer Transportrichtung (TR) entlang einer Transportbandebene (TE) des Transportbands (100), wobei das Transportband (100)
a) an einer Tragseite des Transportbands (100) zumindest eine entlang der Transportbandebene (TE) ausgerichtete Tragfläche (110) zum Tragen der Güter und
b) an einer Führungsseite des Transportbands (100) zumindest eine entlang der Transportbandebene (TE) ausgerichtete Führungsfläche (120) zur Führung des Transportbands (100) und
c) in der Führungsfläche (120) zumindest eine Nut (130) zum Eingriff eines Führungselements (140) zur Führung des Transportbands (100) entlang der Transportrichtung (TR) umfasst, wobei eine Längsachse der Nut (130) entlang der Transportrichtung (TR) ausgerichtet ist,
wobei die zumindest eine Nut (130)
d) zumindest eine Bodenfläche (132) zur Begrenzung einer Eindringtiefe des Führungselements (140) in das Transportband (100) und
e) zumindest eine schräg zur Transportbandebene (TE) angeordnete und die Führungsfläche (120) mit der Bodenfläche (132) verbindende linke Flankenfläche (131) zur linken Seitenführung Führungselements (140) und
f) zumindest eine schräg zur Transportbandebene (TE) angeordnete und die Führungsfläche (120) mit der Bodenfläche (132) verbindende rechte Flankenfläche (133) zur rechten Seitenführung des Führungselements (140) umfasst, wobei
h) eine Bodenbreite (BB) der Bodenfläche (132) senkrecht zur Transportrichtung (TR) kleiner als eine Öffnungsbreite (OB) der Nut (130) senkrecht zur Transportrichtung (TR) und in einer Ebene mit der Führungsfläche (120) ist, **dadurch gekennzeichnet, dass**
i) die Bodenfläche (132), die linke Flankenfläche (131) und/oder die rechte Flankenfläche (133) eine geringere Rauheit hat als die Führungsfläche (120).

2. Transportband nach Anspruch 1,
**dadurch gekennzeichnet, dass**
die linke Flankenfläche (131) in einem linken Übergangsbereich (134) und die rechte Flankenfläche (133) in einem rechten Übergangsbereich (135) in die Bodenfläche (132) übergeht, wobei der linke Übergangsbereich (134) und/oder der rechte Übergangsbereich (133) abgerundet ausgebildet ist.

3. Transportband (100) nach einem der Ansprüche 1 bis 2,
**dadurch gekennzeichnet, dass**
die linke Flankenfläche (131) und die rechte Flankenfläche (133) plan sind.

4. Transportband (100) nach einem der Ansprüche 1 bis 3,
**dadurch gekennzeichnet, dass**
die Bodenfläche (132) um die Längsachse zur Nut (130) hin konkav gewölbt ist.

5. Transportband (100) nach einem der Ansprüche 1 bis 4,
**dadurch gekennzeichnet, dass**
a) die linke Flankenfläche (131) mit der rechten Flankenfläche (133) einen Flankenwinkel (α) einschließt,
b) wobei der Flankenwinkel (α) von 60° bis 120°, bevorzugt von 80° bis 100°, beträgt.

6. Transportsystem mit einem elastischen Transportband (100) zum Transportieren von
Gütern in einer Transportrichtung (TR) entlang einer Transportbandebene (TE) des Transportbands (100),
**dadurch gekennzeichnet, dass**
a) das Transportband (100) nach einem der Ansprüche 1 bis 5 ausgestaltet ist, und
b) das Transportsystem zumindest ein Führungselement (140) umfasst, wobei das Führungselement (140) zur Führung des Transportbands (100) entlang der Transportrichtung (TR) in die zumindest eine Nut (130) des Transportbands (100) eingreift.

7. Transportsystem nach Anspruch 6,
**dadurch gekennzeichnet, dass**
das Transportband (100) eine Mehrzahl von Nuten (130) umfasst, wobei das Transportsystem zu jeder Nut (130) zumindest ein Führungselement (140) umfasst, das zur Führung des Transportbands (100) entlang der Transportrichtung (TR) in die jeweilige Nut (130) eingreift.

8. Transportsystem nach Anspruch 6 oder 7,
**dadurch gekennzeichnet, dass**
das zumindest eine Führungselement (140) in einem Montagezustand des Transportbandes (100) von der linken Flankenfläche (131), der Bodenfläche (132) und/oder der rechten Flankenfläche (133) der zumindest einen Nut (130) beabstandet ist.

9. Transportsystem nach einem der Ansprüche 6 bis 8,
**dadurch gekennzeichnet, dass**
sich das zumindest eine Führungselement (140) auf des Transportband (100) zu mit einem Öffnungswinkel (β) verjüngt, wobei der Öffnungswinkel (β) bevorzugt kleiner als ein Flankenwinkel (α) der zumindest einen Nut (130) ist und/oder von 30° bis 90°, besonders bevorzugt von 40° bis 60°, beträgt.

10. Transportsystem nach einem der Ansprüche 6 bis 9,
**dadurch gekennzeichnet, dass**
das Führungselement (140) als Führungsbolzen oder Führungssteg auf einer Mantelfläche einer Walze zum Umlenken und/oder zum Antrieb des Transportbands (100) angeordnet ist.

11. Verfahren zur Herstellung eines Transportbandes (100) nach einem der Ansprüche 1
bis 5 mit folgenden Schritten:
a) Bereitstellen eines Rohlings für das Transportband (100) mit zumindest einer entlang einer Transportbandebene (TE) des Transportbands (100) ausgerichteten Führungsfläche (120) zur Führung des Transportbands (100) an der Führungsseite des Transportbandes (100),
b) Einbringen zumindest einer Nut (130) zum Eingriff eines Führungselements (140) zur Führung des Transportbands (100) in die zumindest eine Führungsfläche (120), wobei eine Längsachse der Nut (130) entlang der Transportrichtung (TR) ausgerichtet ist, und
c) Glätten einer Bodenfläche (132), einer linken Flankenfläche (131) und/oder einer rechten Flankenfläche (133) der zumindest einen Nut (130).

12. Verfahren nach Anspruch 11,
**dadurch gekennzeichnet, dass**
das Einbringen eine spanende Bearbeitung der Führungsfläche (120), bevorzugt ein Fräsen und/oder ein Schleifen der zumindest einen Nut (130) in die zumindest eine Führungsfläche (120), umfasst.

13. Verfahren nach Anspruch 11 oder 12,
**gekennzeichnet durch**
ein mechanisches Entfernen von durch das Einbringen abgetragenem Material von dem Transportband, bevorzugt durch ein Abbürsten, Absaugen und/oder Abblasen des Materials.

14. Verfahren nach einem der Ansprüche 11 bis 13,
**dadurch gekennzeichnet, dass**
das Glätten ein Erhitzen zumindest der Bodenfläche (132), der linken Flankenfläche (131) und/oder der rechten Flankenfläche (133) der zumindest einen Nut (130) mit einer Wärmeintensität umfasst, wobei die Wärmeintensität zum Erhitzen von bei dem Einbringen abgetragenem Material des Transportbands (100) über einer Glasübergangstemperatur, Schmelztemperatur und/oder Zersetzungstemperatur des Materials und bevorzugt zum Erhitzen der Führungsfläche (120) auf eine Temperatur unterhalb einer Glasübergangstemperatur, Schmelztemperatur und/oder Zersetzungstemperatur des Materials ausgewählt ist.

15. Verfahren nach Anspruch 14,
**dadurch gekennzeichnet, dass**
das Erhitzen ein globales Erhitzen der Bodenfläche (132), der linken Flankenfläche (131) und der rechten Flankenfläche (133) der zumindest einen Nut (130) und der Führungsfläche (120), bevorzugt mit einem Heißluftgebläse, umfasst.

## Claims

1. Elastic conveyor belt (100) for a transport system for conveying goods in a conveying direction (TR) along a conveyor belt plane (TE) of the conveyor belt (100), the conveyor belt (100) comprising,
a) on a carrying side of the conveyor belt (100), at least one carrying surface (110) which is oriented along the conveyor belt plane (TE) and is intended for carrying the goods, and,
b) on a guide side of the conveyor belt (100), at least one guide surface (120) which is oriented along the conveyor belt plane (TE) and is intended for guiding the conveyor belt (100), and,
c) in the guide surface (120), at least one groove (130) for the engagement of a guide element for guiding the conveyor belt (100) along the conveying direction (TR), a longitudinal axis of the groove (130) being oriented along the conveying direction (TR),
wherein the at least one groove (130)
d) comprises at least one base surface (132) for defining a penetration depth of the guide element into the conveyor belt (100), and
e) at least one left flank surface (131), which is arranged obliquely to the conveyor belt plane (TE) connecting the guide surface (120) to the base surface (132), for left directional control of the guide element, and
f) at least one right flank surface (133), which is arranged obliquely to the conveyor belt plane (TE) connecting the guide surface (120) to the base surface (132), for right directional control of the guide element, wherein
g) a base width (BB) of the base surface (132) perpendicular to the conveying direction (TR) is less than an opening width (OB) of the groove (130) perpendicular to the conveying direction (TR) and in a plane with the guide surface (120),
**characterized in that**
h) the base surface (132), the left flank surface (131) and/or the right flank surface (133) has a lower roughness than the guide surface (120).

2. Conveyor belt (100) according to claim 1,
**characterized in that**
the left flank surface (131) transitions into the base surface (132) in a left transition region (134), and the right flank surface (133) transitions into the base surface (132) in a right transition region (135), wherein the left transition region (134) and/or the right transition region (133) is curved.

3. Conveyor belt (100) according to any of claims 1 to 2,
**characterized in that**
the left flank surface (131) and the right flank surface (133) are planar.

4. Conveyor belt (100) according to any of claims 1 to 3,
**characterized in that**
the base surface (132) is curved around the longitudinal axis concavely towards the groove (130).

5. Conveyor belt (100) according to any of claims 1 to 4,
**characterized in that**
a) the left flank surface (131) encloses flank angle (α) with the right flank surface (133)
c) wherein the flank angle (α) amounts from 60° to 120°, preferably from 80° to 100°.

6. Transport system comprising an elastic conveyor belt (100) for conveying goods in a conveying direction (TR) along a conveyor belt plane (TE) of the conveyor belt (100),
**characterized in that**
a) the conveyor belt (100) is designed according to any of claims 1 to 5, and
b) the transport system comprises at least one guide element (140), wherein the guide element (140) is configured to engage in the at least one groove (130) of the conveyor belt (100) in order to guide the conveyor belt (100) along the conveying direction (TR).

7. Transport system according to claim 6,
**characterized in that**
the conveyor belt (100) comprises a plurality of grooves (130), the transport system comprising at least one guide element (140) for each groove (130), each guide element (140) engaging in the respective groove (130) to guide the conveyor belt (100) along the transport direction (TR).

8. Transport system according to claim 6 or 7,
**characterized in that**
the at least one guide element (140) is spaced apart from the left flank surface (131), the base surface (132) and/or the right flank surface (133) of the at least one groove (130) when the conveyor belt (100) is in an assembled state.

9. Transport system according to one of claims 6 to 8,
**characterized in that**
the at least one guide element (140) tapers towards the conveyor belt (100) with an opening angle (β), the opening angle (β) preferably being smaller than a flank angle (α) of the at least one groove (130) and/or amounting to 30° to 90°, particularly preferably from 40° to 60°.

10. Transport system according to one of claims 6 to 9,
**characterized in that**
the guide element (140) is arranged as a guide pin or guide web on a lateral surface of a roller for deflecting and/or for driving the conveyor belt (100).

11. Method for producing a conveyor belt (100) according to one of claims 1 to 5 comprising the following steps:
a) providing a blank for the conveyor belt (100) with at least one guide surface (120) aligned along a conveyor belt plane (TE) of the conveyor belt (100) for guiding the conveyor belt (100) on the guide side of the conveyor belt (100),
b) incorporating at least one groove (130) for engaging a guide element (140) for guiding the conveyor belt (100) in the at least one guide surface (120), a longitudinal axis of the groove (130) being aligned along the transport direction (TR), and
c) smoothing a base surface (132), a left flank surface (131) and/or a right flank surface (133) of the at least one groove (130).

12. Method according to claim 11,
**characterized in that**
the incorporation comprises machining of the guide surface (120), preferably milling and/or grinding of the at least one groove (130) in the at least one guide surface (120).

13. Method according to claim 11 or 12,
**characterized by**
a mechanical removal of material removed by the introduction from the conveyor belt (100), preferably by brushing, suction and/or blowing off the material.

14. Method according to one of claims 11 to 13,
**characterized in that**
the smoothing comprises heating at least the base surface (132), the left flank surface (131) and/or the right flank surface (133) of the at least one groove (130) with a heat intensity, wherein the heat intensity is selected to heat material of the conveyor belt (100) removed during the introduction above a glass transition temperature, melting temperature and/or decomposition temperature of the material and preferably for heating the guide surface (120) to a temperature below a glass transition temperature, melting temperature and/or decomposition temperature of the material.

15. Method according to claim 14,
**characterized in that**
the heating comprises global heating of the base surface (132), the left flank surface (131) and the right flank surface (133) of the at least one groove (130) and of the guide surface (120), preferably with a hot air blower.

## Revendications

1. Bande transporteuse (100) élastique pour un système de transport pour transporter des marchandises dans une direction de transport (TR) le long d'un plan de la bande transporteuse (TE) de la bande transporteuse (100), la bande transporteuse (100) comprenant
a. sur un côté de transport de la bande transporteuse (100) au moins une surface de transport (110) alignée le long du plan de la bande transporteuse (TE) pour transporter les marchandises et
b. sur un côté de guidage de la bande transporteuse (100), au moins une surface de guidage (120) alignée le long du plan de la bande transporteuse (TE) pour guider la bande transporteuse (100) et
c. dans la surface de guidage (120) au moins une rainure (130) pour l'engagement d'un élément de guidage (140) pour guider la bande transporteuse (100) le long de la direction de transport (TR), un axe longitudinal de la rainure (130) étant aligné le long de la direction de transport (TR)
l'au moins une rainure (130) comprenant
d. au moins une surface de fond (132) pour limiter une profondeur de pénétration de l'élément de guidage (140) dans la bande transporteuse (100) et
e. au moins une surface de flanc gauche (131) disposée obliquement par rapport au plan de la bande transporteuse (TE) et reliant la surface de guidage (120) à la surface de fond (132) pour le guidage latéral gauche de l'élément de guidage (140) et
f. au moins une surface latérale droite (133) disposée obliquement par rapport au plan de la bande transporteuse (TE) et reliant la surface de guidage (120) à la surface de fond (132) pour le guidage latéral droit de l'élément de guidage (140),
g. une largeur inférieure (BB) de la surface de fond (132) perpendiculaire à la direction de transport (TR) étant inférieure à une largeur d'ouverture (OB) de la rainure (130) perpendiculaire à la direction de transport (TR) et dans un plan avec la surface de guidage (120),
**caractérisé en ce que**
h. la surface de fond (132), la surface de flanc gauche (131) et/ou la surface de flanc droit (133) a une rugosité inférieure à la surface de guidage (120).

2. Bande transporteuse (100) selon la revendication 1,
**caractérisé en ce que**
la surface de flanc gauche (131) rejoint la surface de fond (132) dans une zone de transition gauche (134), et la surface de flanc droit (133) rejoint la surface de fond (132) dans une zone de transition droite (135), la zone de transition gauche (134) et/ou la zone de transition droite (133) étant arrondie.

3. Bande transporteuse (100) selon l'une des revendications 1 à 2,
**caractérisé en ce que**
la surface de flanc gauche (131) et la surface de flanc droit (133) sont planes.

4. Bande transporteuse (100) selon l'une des revendications 1 à 3,
**caractérisé en ce que**
la surface de fond (132) est incurvée de manière concave autour de l'axe longitudinal vers la rainure (130).

5. Bande transporteuse (100) selon l'une quelconque des revendications 1 à 4, **caractérisé en ce que**
a. la surface de flanc gauche (131) forme un angle de flanc (α) avec la surface de flanc droit (133),
b. l'angle de flanc (a) étant de 60° à 120°, de préférence de 80° à 100°.

6. Système de transport comprenant une bande transporteuse (100) élastique pour transporter des marchandises dans une direction de transport (TR) le long d'un plan de bande transporteuse (TE) de la bande transporteuse (100), **caractérisé en ce que**
a. la bande transporteuse (100) est conçue selon l'une des revendications 1 à 5, et
b. le système de transport comprend au moins un élément de guidage (140), l'élément de guidage (140) s'engageant dans au moins une rainure (130) de la bande transporteuse (100) pour guider la bande transporteuse (100) le long de la direction de transport (TR),

7. Système de transport selon la revendication 6,
**caractérisé en ce que**
la bande transporteuse (100) comprend une pluralité de rainures (130), le système de transport comprenant au moins un élément de guidage (140) pour chaque rainure (130) qui s'engage dans la rainure respective (130) pour guider la bande transporteuse (100) le long de la direction de transport (TR).

8. Système de transport selon la revendication 6 ou 7,
**caractérisé en ce que**
l'au moins un élément de guidage (140) est espacé de la surface de flanc gauche (131), de la surface de fond (132) et/ou de la surface de flanc droit (133) de l'au moins une rainure (130) lorsque la bande transporteuse (100) est dans un état d'assemblage.

9. Système de transport selon l'une des revendications 6 à 8,
**caractérisé en ce que**
l'au moins un élément de guidage (140) se rétrécit vers la bande transporteuse (100) avec un angle d'ouverture (β), l'angle d'ouverture (β) étant de préférence inférieur à un angle de flanc (α) de l'au moins une rainure (130) et/ou de 30° à 90°, de manière particulièrement préférée de 40° à 60°.

10. Système de transport selon l'une des revendications 6 à 9,
**caractérisé en ce que**
l'élément de guidage (140) est agencé sous forme de tige de guidage ou de bande de guidage sur une surface latérale d'un rouleau pour dévier et/ou pour entraîner la bande transporteuse (100).

11. Procédé de fabrication d'une bande transporteuse (100) selon l'une des revendications 1 à 5 comprenant les étapes suivantes :
a. fournir une ébauche pour la bande transporteuse (100) avec au moins une surface de guidage (120) pour guider la bande transporteuse (100) sur le côté de guidage de la bande transporteuse (100) alignée le long d'un plan de bande transporteuse (TE) de la bande transporteuse (100),
b. incorporer au moins une rainure (130) pour engager un élément de guidage (140) pour guider la bande transporteuse (100) dans l'au moins une surface de guidage (120), un axe longitudinal de la rainure (130) étant aligné le long de la direction de transport (TR), et
c. lisser une surface de fond (132), une surface de flanc gauche (131) et/ou une surface de flanc droit (133) de l'au moins une rainure (130).

12. Procédé selon la revendication 11,
**caractérisé en ce que**
l'incorporation comprend l'usinage de la surface de guidage (120), de préférence le fraisage et/ou le meulage de l'au moins une rainure (130) dans l'au moins une surface de guidage (120).

13. Procédé selon la revendication 11 ou 12,
**caractérisé par**
une évacuation mécanique de la matière enlevée par l'incorporation de la bande transporteuse (100), de préférence par brossage, aspiration et/ou soufflage de la matière.

14. Procédé selon l'une des revendications 11 à 13,
**caractérisé en ce que**
le lissage comprend le chauffage d'au moins la surface de fond (132), la surface de flanc gauche (131) et/ou la surface de flanc droit (133) de l'au moins une rainure (130) avec une intensité thermique, l'intensité thermique étant sélectionnée pour chauffer le matériau de la bande transporteuse (100) retiré lors de l'introduction au-dessus d'une température de transition vitreuse, d'une température de fusion et/ou d'une température de décomposition du matériau et de préférence pour chauffer la surface de guidage (120) à une température inférieure à une température de transition vitreuse, température de fusion et/ou température de décomposition du matériau.

15. Procédé selon la revendication 14,
**caractérisé en ce que**
le chauffage comprend un chauffage global de la surface de fond (132), de la surface de flanc gauche (131) et de la surface de flanc droit (133) de l'au moins une rainure (130) et de la surface de guidage (120), de préférence avec un ventilateur à air chaud.
